# EUROPÄISCHE PATENTSCHRIFT

(11) **EP 2 129 885 B1**
(45) Veröffentlichungstag und Bekanntmachung des Hinweises auf die Patenterteilung: **08.02.2012**
(21) Anmeldenummer: 07856427.5
(22) Anmeldetag: 06.12.2007
(51) Int. Cl.: F16L 11/08, F16L 11/127, F16L 53/00, F01N 3/20, H05B 3/58

(54) **BEHEIZBARE LEITUNG**
HEATABLE PIPELINE
CONDUITE POUVANT ÊTRE CHAUFFÉE

(30) Priorität: 27.03.2007 DE 102007014670
(43) Veröffentlichungstag der Anmeldung: 09.12.2009
(60) Teilanmeldung: 11008918.2
(73) Patentinhaber: VERITAS AG, 63571 Gelnhausen (DE)
(72) Erfinder: SEYLER, Andreas, 63584 Gründau (DE); VAN HOOREN, Marc, 63579 Bernbach (DE); HUMMEL, Gerhard, 63633 Birstein (DE)
(74) Vertreter: Grünecker, Kinkeldey, Stockmair & Schwanhäusser
(86) Internationale Anmeldenummer: PCT/EP2007/010622
(87) Internationale Veröffentlichungsnummer: WO 2008/116492

(56) Entgegenhaltungen:
- EP-A- 0 312 204
- EP-A- 1 306 202
- EP-A- 1 329 660
- EP-A- 1 764 541
- WO-A-2007/032033
- DE-A1- 19 915 228
- DE-C1- 19 731 178
- DE-C2- 3 202 854
- DE-U- 6 944 664
- DE-U1- 20 103 677
- US-A- 5 428 706

## Beschreibung

Die vorliegende Erfindung betrifft eine beheizbare Leitung, insbesondere zum Transport von Flüssigkeiten in Fahrzeugen gemäß dem Oberbegriff von Anspruch 1.

Eine derartige beheizbare Flüssigkeitsleitung ist beispielsweise aus der EP 1 519 098 B1 bekannt, bei der unmittelbar auf einer inneren Kunststoffschicht ein Heizdraht angeordnet und unmittelbar um die Kunststoffschicht und den Heizdraht ein elektrisch isolierendes Band wendelförmig herumgewickelt ist.

Solche beheizbaren Leitungen werden z.B. für den Transport von Harnstoffen wie etwa dem so genannten "AdBlue" für dieselbetriebene Fahrzeuge eingesetzt, um hier ein Einfrieren bei entsprechend niedrigen Umgebungstemperaturen zu vermeiden. Darüber hinaus können diese Leitungen auch zum Transport von Dieselkraftstoff, Kühl- bzw. Waschwasser oder Bremsöl verwendet werden. Zusätzlich zu dem gewünschten Effekt der Verhinderung des Einfrierens bzw. der Viskositätserhöhung der jeweiligen Flüssigkeit können die beheizbaren Leitungen im Falle des Dieselkraftstoffs dessen Vorwärmung dienen, was beispielsweise für eine bessere Zündfähigkeit bzw. Verbrennung des Diesels sorgt.

Die Druckschrift WO 2007/032033 A1 beschreibt einen mehrschichtigen beheizbaren Schlauch, der eine Aufheizung einer zu transportierenden Harnstofflösung ermöglicht. Dieser Schlauch besteht aus einer inneren Schicht, einem Heizelement, einer dichtenden Schicht, einer Isolationsschicht und aus einer Deckschicht.

Bei den bekannten beheizbaren Leitungen ergibt sich oftmals das Problem, dass für eine effektive Erwärmung der durch sie transportierten Flüssigkeit eine relativ hohe Heizleistung erforderlich ist. Das bedeutet einerseits einen erhöhten Strombedarf, andererseits muss das verwendete Heizelement, z.B. ein Heizleiter, entsprechend groß dimensioniert werden bzw. mit einer großen Länge um die innere Lage herumgewickelt werden, was sich negativ auf die Kosten auswirkt.

Es ist daher Aufgabe der Erfindung, eine beheizbare Leitung zu generieren, die allen Anforderungen hinsichtlich Produktion und Gebrauch genügt.

Diese Aufgabe wird erfindungsgemäß gelöst durch eine beheizbare Leitung gemäß Anspruch 1.

Hieraus ergibt sich eine besonders druckfeste Leitung, wobei das Heizelement zwischen den beiden Verstärkungslagen gut geschützt ist. Im Falle der Verwendung eines Heizdrahtes als Heizelement ist hierbei insbesondere die entsprechende Drahtisolierung bei der Verarbeitung der Leitung geschützt, so dass beispielsweise eine Verletzung des Heizdrahtes bzw. der Drahtisolierung durch das Extrusionswerkzeug während der Extrusion der äußeren Lage, z.B. der Deckenlage, vermieden werden kann. Zudem bietet die Anordnung des Heizelements zwischen den beiden Verstärkungslagen Vorteile hinsichtlich dessen elektrischer Kontaktierung, beispielsweise mit einem Kontaktstecker. Das Heizelement hat bei dieser Anordnung im Wesentlichen Kontakt mit den Verstärkungslagen und kann dadurch relativ leicht bei äußerem Kraftangriff bewegt bzw. in seiner Lage verändert werden. So kann beispielsweise bei Verwendung eines Heizdrahtes als Heizelement dieser zwecks Kontaktierung auf einfache und mühelose Weise am gegebenenfalls abgelängten Ende der Leitung herausgezogen werden.

Diese beschriebene einfache Art der Kontaktierung des Heizelements steht im Gegensatz zu der aufwendigen und nachteiligen Kontaktierungsmethode gemäß Druckschrift EP 1 329 660, die einen flexiblen, mehrschichtigen und beheizbaren Schlauch beschreibt, wobei der Schlauch 1 wenigstens eine Verstärkungsschicht 2, eine elastomere Außenschicht 4 und einen elektrischen Heizleiter 3 aufweist. Hierbei ist der Heizleiter 3 außerhalb der äußeren Lage der Verstärkungsschicht 2, aber unter oder innerhalb der elastomeren Außenschicht 4 eingebettet. Um hier eine Kontaktierung des Heizleiters beispielsweise mit einem Kontaktstecker zu realisieren, ist es notwendig, die frei zugänglichen Enden des Heizdrahts am stirnseitigen Ende eines Schlauchabschnitts z.B. mit einer Zange zu greifen und dann mit einer radial nach außen wirkenden Kraft unter Durchtrennen der elastomeren Außenschicht freizulegen, wobei es zumindest in Bereich, in dem der Heizleiter radial nach außen gezogen wurde, zu einer Beschädigung der Außenschicht kommt.

Hinsichtlich der Bezeichnungen *"innere Lage"* und *"äußere Lage"* wird darauf hingewiesen, dass hierdurch keine absoluten geometrischen (Positions-)Lagen beschrieben sind, so dass sich beispielsweise an die innere Lage innen eine weitere, z.B. innerste Lage, und an die äußere Lage außen eine weitere, z.B. eine Decklage, anschließen kann.
Der Einsatztemperaturbereich beschreibt hierbei den Umgebungs-Temperaturbereich, innerhalb dessen der Betrieb eines Fahrzeuges normalerweise vorgesehen ist, d.h. etwa zwischen -40°C und +70°C.

Es kann von Vorteil sein, dass die Wärmeleitfähigkeit der inneren Lage größer als 0,75 W/mK ist und vorzugsweise zwischen 0,8 und 1,0 W/mK liegt, und die Wärmeleitfähigkeit der äußeren Lage kleiner als 0,05 W/mK ist und vorzugsweise zwischen 0,01 und 0,04 W/mK liegt. Bei besagten Werten der Wärmeleitfähigkeit für die innere und die äußere Lage kommt es zu einer sehr effektiven Wärmeleitung in Richtung der durch die Leitung transportierten Flüssigkeit und nur zu einer geringen Wärmeleitung in Richtung der Umgebung der Leitung.

Ebenso kann es von Vorteil sein, dass die innere und/oder die äußere Lage ein polymeres Material, vorzugsweise einen elastomeren Werkstoff, aufweisen bzw. aufweist. Diese Materialien lassen sing generell gut chemikalien- bzw. medienbeständig, vergleichsweise günstig und zudem relativ einfach verarbeitbar bzw. formbar.

Zudem kann es von Vorteil sein, dass die innere und die äußere Lage den Werkstoff EPDM aufweisen. Dieser Werkstoff zeichnet sich insbesondere durch eine gute Chemikalien- bzw. Medienbeständigkeit, vor allem in Hinblick auf Harnstoff, aus. Darüber hinaus besitzt er eine hohe Wetter- und Feuchtigkeitsbeständigkeit, eine hohe Ozonresistenz und eine sehr gute thermische Beständigkeit.

Darüber hinaus kann es von Vorteil sein, dass die äußere Lage ein eine offene Zellstruktur aufweisendes EPDM aufweist und vorzugsweise aus diesem besteht. Durch die offene Zellstruktur ergibt sich eine sehr geringe Wärmeleitfähigkeit, so dass eine Wärmeleitung nach außen, d.h. zur Umgebung der beheizbaren Leitung, nur schwer stattfinden kann.

In einer bevorzugten Ausführungsform weist die innere Lage ein mit Partikeln hoher Wärmeleitfähigkeit gefülltes EPDM auf und besteht vorzugsweise aus diesem. Durch die Füllung mit Partikeln, welche eine hohe Wärmeleitfähigkeit aufweisen, ergibt sich insgesamt eine hohe Wärmeleitfähigkeit des gefüllten EPDM-Systems, so dass die Wärmeleitung nach innen, d.h. in Richtung der Flüssigkeit, sehr effektiv ist.

Es kann günstig sein, dass die Verstärkungslagen ein metallisches oder textiles Gewebe aufweisen und vorzugsweise daraus bestehen. Diese Art der Verstärkungslagen sorgen für einen hohen und verlässlichen Schutz gegenüber einem Platzen bzw. Bersten der Leitung.

Außerdem kann es günstig sein, dass sich an die innere Lage innen eine Sperrschicht anschließt. Dies kann sich positiv auf die Permeationseigenschaften der Leitung, insbesondere bei Harnstoff als zu transportierender Flüssigkeit, auswirken. Um die hohe Wärmeleitung nach innen, d.h. in Richtung der Flüssigkeit, durch die Sperrschicht nicht ungünstig zu beeinflussen, kann die Sperrschicht sehr dünn ausgeführt werden. Zudem ist es möglich, die Sperrschicht ebenso mit Partikeln, die eine hohe Wärmeleitfähigkeit aufweisen, zu füllen. Es kann sich als günstig erweisen, dass die Sperrschicht ein polymeres Material, vorzugsweise ein Elastomer oder ein thermoplastisches Elastomer, aufweist. Diese Materialien lassen sich gut verarbeiten und sind vergleichsweise günstig.

Zudem kann es sich als günstig erweisen, dass die Sperrschicht ein PP-EPDM-Copolymer aufweist und vorzugsweise aus diesem besteht. Dieser Werkstoff zeichnet sich insbesondere dadurch aus, dass er die Permeation von Harnstoff weitgehend verhindert.

Vorzugsweise ist das Heizelement zumindest ein Heizdraht. Solch ein Heizelement ist relativ günstig und lässt sich vergleichsweise verarbeiten bzw. in die Leitung während deren Herstellung einfügen.

Es kann von Vorteil sein, dass sich das Heizelement zumindest entlang der Axialrichtung der Leitung erstreckt. Diese Art der Anordnung lässt sich besonders einfach realisieren.

Es kann ebenso von Vorteil sein, dass sich das Heizelement sowohl entlang der Axialrichtung, als auch der Radialrichtung der Leitung erstreckt. Beispielsweise ist es möglich, dass das Heizelement, z.B. in Form eines Heizdrahtes, innerhalb der Leitung spiralförmig angeordnet ist. Somit kann die Heizleistung pro Längenabschnitt der Leitung erhöht bzw. durch die Steigung gezielt angepasst werden.

Die Merkmale und Vorteile der Erfindung werden eingehender in der nachstehenden Beschreibung dargelegt, wobei auf die beigefügten Zeichnungen Bezug genommen wird, auf denen folgendes dargestellt ist:
- Fig. 1:: perspektivische Ansicht einer efindungsgemäßen beheizbaren Leitung mit 4 Lagen
- Fig. 2:: perspektivische Ansicht einer erfindungsgemäßen beheizbaren Leitung mit 5 Lagen
- Fig. 3a:: Schematische Darstellung einer Anordnungsmöglichkeit von stromführenden Elementen innerhalb einer erfindungsgemäßen Leitung
- Fig. 3b:: Schematische Darstellung einer weiteren Anordnungsmöglichkeit von stromführenden Elementen innerhalb einer unkonfektionierten erfindungsgemäßen Leitung
- Fig. 3c:: Schematische Darstellung einer weiteren Anordnungsmöglichkeit von stromführenden Elementen innerhalb einer unkonfektionierten erfindungsgemäßen Leitung.

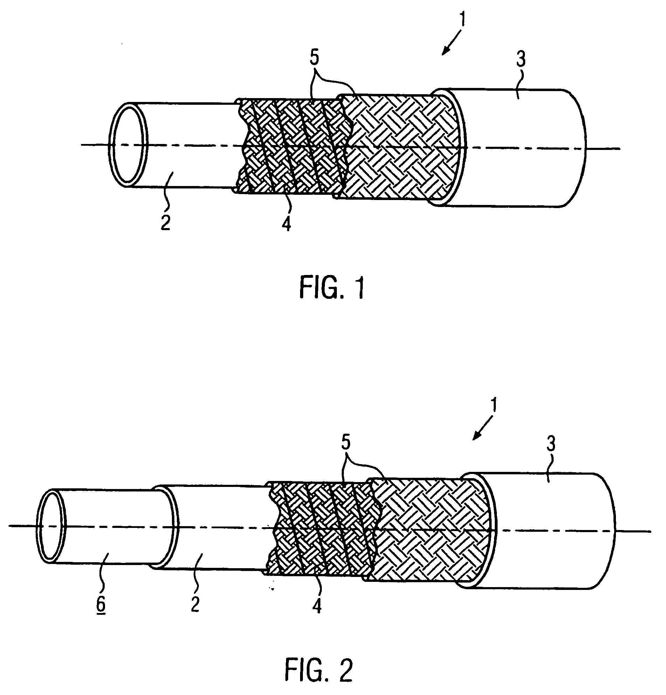

Die nicht maßstäbliche Figur 1 zeigt die perspektivische Ansicht einer erfindungsgemäßen, vierlagigen Leitung 1 mit einer inneren Lage 2, einer äußeren Lage 3 und zwei zwischen der inneren Lage und der äußeren Lage angeordneten Verstärkungslagen 5. Zwischen den beiden Verstärkungslagen ist das Heizelement 4 in Form eines Heizdrahtes angeordnet, wobei der Heizdraht spiralförmig angeordnet ist. Andere Anordnungen des Heizdrahtes sind vorstellbar. So ist beispielsweise denkbar, dass der Heizdraht sich ausschließlich entlang der Axialrichtung der Leitung erstreckt. Zudem können anstatt eines einzelnen mehrere Heizdrähte vorgesehen sein. Die äußere Lage 3 besteht aus EPDM mit einer offenen Zellstruktur und weist eine geringe Wärmeleitfähigkeit von 0,035 W/mK auf. Die innere Lage 2 besteht aus EPDM, das mit Partikeln hoher Wärmeleitfähigkeit, z.B. aus Aluminiumoxid oder Aluminiumnitrid, gefüllt ist und weist eine hohe Wärmeleitfähigkeit von 1 W/mK auf. Die Verstärkungslagen 5 bestehen aus einem textilen Gewebe, es sind jedoch auch metallische Gewebe vorstellbar. Zudem ist neben der Verwendung eines textilen oder metallischen Gewebes die Verwendung eines ebensolchen Gewirkes oder Gestrickes oder Geflechts möglich.

Die nicht maßstäbliche Figur 2 zeigt die perspektivische Ansicht einer erfindungsgemäßen, fünflagigen Leitung 1. Unterschiedlich im Gegensatz zur Leitung gemäß Figur 1 ist lediglich die zusätzliche Verwendung einer sich innen an die Innenlage 2 anschließenden Sperrschicht 6 aus einem PP-EPDM-Copolymer, weshalb auf die verbleibenden gleichen Merkmale hier nicht näher eingegangen wird.

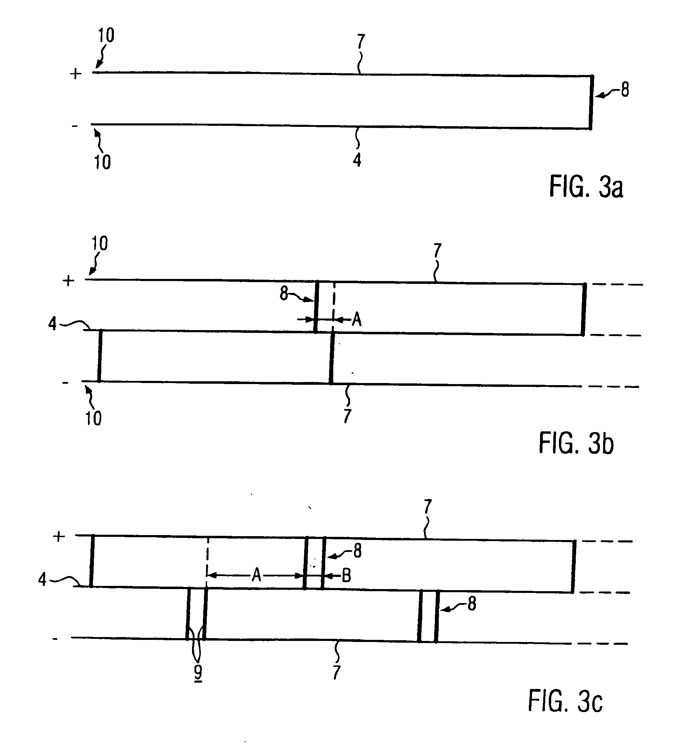

Figur 3a zeigt die schematische, nicht maßstäbliche Darstellung einer ersten Anordnungsmöglichkeit von stromführenden Elementen innerhalb einer erfindungsgemäßen Leitung. Das Heizelement 4, beispielsweise in Form eines Heizleiters, ist an einem Ende über eine Verbindungseinrichtung 8 mit einem Ende des sich im Wesentlichen entlang der nicht dargestellten Leitung erstreckenden Leiters 7 elektrisch verbunden, wobei der Kontaktierungsabschnitt 10 des Heizleiters mit dem Minuspol einer nicht dargestellten Spannungsquelle und der Kontaktierungsabschnitt 10 des Leiters mit dem Pluspol der nicht dargestellten Spannungsquelle verbunden ist, und die beiden benachbarten Kontaktierungsabschnitte etwa 1 cm voneinander beabstandet sind.

Figur 3b zeigt die schematische, nicht maßstäbliche Darstellung einer weiteren Anordnungsmöglichkeit von stromführenden Elementen innerhalb einer noch unkonfektionierten und damit nicht auf die Einsatzlänge abgelängten erfindungsgemäßen Leitung. Neben dem Heizelement 4, beispielsweise in Form eines Heizleiters, sind zwei Leiter 7 vorhanden, die sich im Wesentlichen entlang der nicht dargestellten Leitung 1 erstrecken. Die Darstellung gibt nur einen Ausschnitt wieder, der sich in gleicher Weise in beliebiger Länge fortsetzen kann (angedeutet in der Figur durch gestrichelte Linien).

Der als Plusleiter dienende Leiter ist mit dem Kontaktierungsabschnitt 10 am Pluspol einer nicht dargestellten Spannungsquelle verbunden, während der andere, als Minusleiter dienende Leiter mit dem Kontaktierungsabschnitt 10 am Minuspol einer nicht dargestellten Spannungsquelle verbunden ist, wobei der Abstand der beiden Kontaktierungsabschnitt etwa 1 cm beträgt. In dem Ausschnitt gemäß Figur 3b ist der Plusleiter über zwei Verbindungseinrichtungen 8 mit dem Heizleiter verbunden, während der Minusleiter über zwei Verbindungseinrichtungen 8 mit dem Heizleiter verbunden ist. Obwohl anhand des Ausschnitts nicht erkennbar, stimmt auch bei mehr als zwei Verbindungseinrichtungen die Anzahl der Verbindungseinrichtungen, die zwischen Plusleiter und Heizleiter angeordnet sind mit der Anzahl an Verbindungseinrichtungen, die zwischen Minusleiter und Heizleiter angeordnet sind, überein. Ebenfalls anhand des Ausschnitts nicht erkennbar ist der im Wesentlichen äquidistale Abstand zweier benachbarter Verbindungseinrichtungen, die den Plusleiter mit dem Heizleiter bzw. den Minusleiter mit dem Heizleiter verbinden, der beispielsweise 10 cm beträgt.

Die Abstände zwischen den benachbarten Verbindungseinrichtungen, die den Plusleiter mit dem Heizleiter verbinden, und die Abstände zwischen den benachbarten Verbindungseinrichtungen, die den Minusleiter mit dem Heizleiter verbinden, sind im Wesentlichen gleich. Weiterhin sind die den Plusleiter mit dem Heizleiter verbindenden Verbindungseinrichtungen gegenüber den den Minusleiter mit dem Heizleiter verbindenden Verbindungseinrichtungen versetzt angeordnet, so dass jeweils zwei benachbarte Verbindungseinrichtungen, von denen eine den Plusleiter mit dem Heizleiter und die andere den Minusleiter mit dem Heizleiter verbindet, in Bezug auf die Erstreckungsrichtung der Leiter 7 beabstandet sind. Der entsprechende Abstand A beträgt beispielsweise 2 cm.

Die beschriebene Anordnung von Heizleiter, Plusleiter, Minusleiter und den Verbindungseinrichtungen erlaubt hierbei die jeweilige Durchtrennung der Leitung an den Stellen, wo die den Heizleiter mit dem Plusleiter und den Heizleiter mit dem Minusleiter verbindenden Verbindungseinrichtungen benachbart zueinander angeordnet sind. Die durch das Durchtrennen entstehenden Leitungsteile weisen dann jeweils eine im Wesentlichen gleich lange Heizleiterlänge zwischen der Stelle, an welcher der Heizleiter über die entsprechende Verbindungseinrichtung mit dem Plusleiter verbunden ist, und der Stelle, an welcher der Heizleiter über die entsprechende Verbindungseinrichtung mit dem Minusleiter verbunden ist, auf. Dadurch ergeben sich bei den abgetrennten Leitungsteilen auch im Wesentlichen gleiche Heizleistungen.

Durch das Abtrennen der Leitungsteile einer bestimmten Länge von einer Leitung, die ein vielfaches dieser Länge aufweist, gelingt auf sehr einfache und rationelle Weise die Herstellung von Leitungen bestimmter bzw. definierter, gleicher Länge. Die unkonfektionierte Ausgangsleitung lässt sich hierbei kontinuierlich, beispielsweise innerhalb eines Extrusionsprozesses, sehr wirtschaftlich fertigen. Zur Kennzeichnung der Konfektionierungs- oder Trennstellen kann während des Extrusionsprozesses das Einbringen einer jeweiligen Markierung erfolgen.

Zudem kann durch die Mitführung sowohl des Plus-, als auch des Minusleiters die Leitung die zusätzliche Funktion eines elektrischen Leiters übernehmen, so dass eine Durchleitung von Strom durch die Leitung ebenfalls möglich wird. Dies erlaubt beispielsweise die elektrische Verbindung der Leitung mit einem Verbraucher. Ein sonst benötigter eigener Leiter zur elektrischen Versorgung des Verbrauchers wird damit überflüssig und kann eingespart werden.

Darüber hinaus erlaubt die Mitführung sowohl des Plus-, als auch des Minusleiters die elektrische Versorgung des Heizleiters von einer (Kontaktierungs-)Stelle der Leitung, so dass ein einziger Stecker für die Stromversorgung des Heizleiters ausreichend ist.

Figur 3c zeigt die schematische, nicht maßstäbliche Darstellung einer weiteren Anordnungsmöglichkeit von stromführenden Elementen innerhalb einer noch unkonfektionierten und damit nicht auf die Einsatzlänge abgelängten erfindungsgemäßen Leitung. Neben dem Heizelement 4, beispielsweise in Form eines Heizleiters, sind zwei Leiter 7 vorhanden, die sich über die gesamte Länge der nicht dargestellten Leitung 1 erstrecken. Auch diese Darstellung gibt nur einen Ausschnitt wieder, der sich in gleicher Weise in beliebiger Länge fortsetzen kann (angedeutet in der Figur durch gestrichelte Linien).

Der als Plusleiter dienende Leiter ist mit dem Kontaktierungsabschnitt 10 am Pluspol einer nicht dargestellten Spannungsquelle verbunden, während der andere, als Minusleiter dienende Leiter mit dem Kontaktierungsabschnitt 10 am Minuspol der nicht dargestellten Spannungsquelle verbunden ist. Der Plusleiter und der Minusleiter sind jeweils über trennbare Verbindungseinrichtungen 8 mit dem Heizleiter verbunden. Hierbei umfasst jede Verbindungseinrichtung in ungetrenntem Zustand zwei im Wesentlichen parallel zueinander verlaufende, einen Abstand von beispielsweise 2 cm zueinander aufweisende Verbindungsleiter 9. In dem Ausschnitt gemäß Figur 3c ist der Plusleiter über eine ungetrennte und zwei getrennte Verbindungseinrichtungen 8 mit dem Heizleiter verbunden, während der Minusleiter über zwei ungetrennte Verbindungseinrichtungen 8 mit dem Heizleiter verbunden ist. Insgesamt ergibt sich also eine gleiche Anzahl an Verbindungsleitern zwischen dem Plusleiter und dem Heizleiter und dem Minusleiter und dem Heizleiter.

Obwohl anhand des Ausschnitts nicht zu erkennen, stimmt auch bei mehr als zwei Verbindungseinrichtungen 8 respektive vier Verbindungsleitern 9 die Anzahl der Verbindungseinrichtungen bzw. der Verbindungsleiter, die zwischen Plusleiter und Heizleiter angeordnet sind mit der Anzahl an Verbindungseinrichtungen bzw. der Verbindungsleiter, die zwischen Minusleiter und Heizleiter angeordnet sind, überein.

Jeweils zwei benachbarte Verbindungseinrichtungen, welche den Plusleiter mit dem Heizelement verbinden und jeweils zwei benachbarte Verbindungseinrichtungen, welche den Minusleiter mit dem Heizelement verbinden, sind im Wesentlichen äquidistant, beispielsweise mit einer Länge von 10 cm voneinander beabstandet. Darüber hinaus stimmt der Abstand zwischen jeweils zwei benachbarten Verbindungseinrichtungen, welche den Plusleiter mit dem Heizelement verbinden, mit dem Abstand zwischen jeweils zwei benachbarten Verbindungseinrichtungen, welche den Minusleiter mit dem Heizleiter verbinden, im Wesentlichen überein.

Zwei benachbarte Verbindungseinrichtungen, wovon eine den Plusleiter und eine den Minusleiter mit dem Heizelement verbindet, sind in Bezug auf die Erstreckungsrichtung der Leiter mit einem Abstand A von beispielsweise 5 cm zueinander angeordnet.

Die gemäß Figur 3c beschriebene Anordnung von Heizleiter, Plusleiter, Minusleiter und den Verbindungseinrichtungen erlaubt das Abtrennen beliebig langer endständiger Leitungsteile bzw. Leitungsabschnitte von einer vorkonfektionierten Leitung oder das Abtrennen einer beliebig langen Leitung von einer beispielsweise kontinuierlichen, endlosen Leitung, wobei die jeweilige Durchtrennung an den Stellen der zwei Verbindungsleiter aufweisenden Verbindungseinrichtungen erfolgt. Somit ist eine gezielte Konfektionierung bzw. Längenanpassung der Leitung an den jeweiligen Anwendungsfall bzw. die jeweilige Einbausituation möglich. Durch die spezielle Anordnung der Verbindungseinrichtungen ergibt sich auch bei Abtrennung beliebig langer endständiger Leitungsteile bzw. -abschnitte einer vorkonfektionierten Leitung oder bei Abtrennung eines beliebig langen Leitungsstücks von einer kontinuierlichen, endlosen Leitung in den dann vorhandenen bzw. verbleibenden Leitungsabschnitten eine jeweils im Wesentlichen gleiche Heizleiterlänge und damit eine im Wesentlichen gleiche Heizleistung.

Hiermit gelingt auf sehr einfache und rationelle Weise die Herstellung von Leitungen spezieller und dem Bedarfsfall angepasster Längen, wobei auch eine Anpassung bzw. Konfektionierung vor Ort möglich ist. Die unkonfektionierte Ausgangsleitung lässt sich hierbei kontinuierlich, beispielsweise innerhalb eines Extrusionsprozesses, sehr wirtschaftlich fertigen. Zur Kennzeichnung der Konfektionierungs- oder Trennstellen kann während des Extrusionsprozesses das Einbringen einer jeweiligen Markierung erfolgen.

## Patentansprüche

1. Beheizbare Leitung (1), insbesondere zum Transport von Flüssigkeiten in Fahrzeugen, umfassend zumindest eine innere Lage (2), eine äußere Lage (3) und ein Heizelement (4), wobei
zumindest innerhalb des Einsatztemperaturbereichs der beheizbaren Leitung (1) die innere Lage (2) eine höhere Wärmeleitfähigkeit aufweist als die äußere Lage (3)
**dadurch gekennzeichnet, dass**
die Leitung (1) zumindest vierlagig ist mit zwei zwischen der inneren (2) und der äußeren Lage (3) angeordneten Verstärkungslagen (5), wobei das Heizelement (4) zwischen den beiden Verstärkungslagen (5) angeordnet ist und im Wesentlichen Kontakt mit den Verstärkungslagen (5) hat.

2. Beheizbare Leitung (1) nach Anspruch 1, **dadurch gekennzeichnet, dass** die Wärmeleitfähigkeit der inneren Lage (2) größer als 0,75 W/mK ist und die Wärmeleitfähigkeit der äußeren Lage (3) kleiner als 0,05 W/mK ist.

3. Beheizbare Leitung (1) nach Anspruch 1, **dadurch gekennzeichnet, dass** die Wärmeleitfähigkeit der inneren Lage (2) zwischen 0,8 und 1,0 W/mK liegt, und die Wärmeleitfähigkeit der äußeren Lage (3) zwischen 0,01 und 0,04 W/mK liegt.

4. Beheizbare Leitung (1) nach einem der vorhergehenden Ansprüche, **dadurch gekennzeichnet, dass** die innere (2) und/oder die äußere Lage (3) ein polymeres Material oder einen elastomeren Werkstoff aufweisen bzw. aufweist.

5. Beheizbare Leitung (1) nach zumindest einem der vorangegangenen Ansprüche, **dadurch gekennzeichnet, dass** die innere (2) und die äußere Lage (3) den Werkstoff EPDM aufweisen.

6. Beheizbare Leitung (1) nach zumindest einem der vorangegangenen Ansprüche, **dadurch gekennzeichnet, dass** die äußere Lage (3) ein eine offene Zellstruktur aufweisendes EPDM aufweist oder daraus besteht.

7. Beheizbare Leitung (1) nach zumindest einem der vorangegangenen Ansprüche, **dadurch gekennzeichnet, dass** die innere Lage (2) ein mit Partikeln hoher Wärmeleitfähigkeit gefülltes EPDM aufweist oder daraus besteht.

8. Beheizbare Leitung (1) nach zumindest einem der vorangegangenen Ansprüche, **dadurch gekennzeichnet, dass** die Verstärkungslagen (5) ein metallisches oder textiles Gewebe aufweisen oder daraus bestehen.

9. Beheizbare Leitung (1) nach zumindest einem der vorangegangenen Ansprüche, **dadurch gekennzeichnet, dass** sich an die innere Lage (2) innen eine Sperrschicht (6) anschließt.

10. Beheizbare Leitung (1) nach Anspruch 9, **dadurch gekennzeichnet, dass** die Sperrschicht (6) ein polymeres Material oder ein thermoplastisches Elastomer, aufweist.

11. Beheizbare Leitung (1) nach Anspruch 9, **dadurch gekennzeichnet, dass** die Sperrschicht (6) ein Elastomer aufweist.

12. Beheizbare Leitung (1) nach Anspruch 9, **dadurch gekennzeichnet, dass** die Sperrschicht (6) ein PP-EPDM-Copolymer aufweist oder daraus besteht.

13. Beheizbare Leitung (1) nach zumindest einem der vorangegangenen Ansprüche, **dadurch gekennzeichnet, dass** das Heizelement (4) zumindest ein Heizdraht ist.

14. Beheizbare Leitung (1) nach zumindest einem der vorangegangenen Ansprüche, **dadurch gekennzeichnet, dass** sich das Heizelement (4) zumindest entlang der Axialrichtung der Leitung (1) erstreckt.

15. Beheizbare Leitung (1) nach zumindest einem der vorangegangenen Ansprüche, **dadurch gekennzeichnet, dass** sich das Heizelement (4) sowohl entlang der Axialrichtung, als auch der Radialrichtung der Leitung (1) erstreckt.

## Claims

1. Heatable line (1), in particular for conveying fluids in vehicles, comprising at least one inner layer (2), one outer layer (3) and one heating element (4), wherein, at least within the operating temperature range of the heatable line (1), the inner layer (2) has a higher thermal conductivity than the outer layer (3), **characterised in that** the line (1) has at least four layers with two reinforcement layers (5) arranged between the inner layer (2) and the outer layer (3), wherein the heating element (4) is arranged between the two reinforcement layers (5) and substantially contacts the reinforcement layers (5).

2. Heatable line (1) according to Claim 1, **characterised in that** the thermal conductivity of the inner layer (2) is greater than 0.75 W/mK and the thermal conductivity of the outer layer (3) is less than 0.05 W/mK.

3. Heatable line (1) according to Claim 1, **characterised in that** the thermal conductivity of the inner layer (2) is between 0.8 and 1.0 W/mK and the thermal conductivity of the outer layer (3) is between 0.01 and 0.04 W/mK.

4. Heatable line (1) according to any one of the preceding claims, **characterised in that** the inner layer (2) and/or the outer layer (3) comprises/comprise a polymeric material or an elastomeric material.

5. Heatable line (1) according to at least one of the preceding claims, **characterised in that** the inner layer (2) and the outer layer (3) comprise the material EPDM.

6. Heatable line (1) according to at least one of the preceding claims, **characterised in that** the outer layer (3) comprises or consists of EPDM comprising an open cell structure.

7. Heatable line (1) according to at least one of the preceding claims, **characterised in that** the inner layer (2) comprises or consists of EPDM filled with particles of high thermal conductivity.

8. Heatable line (1) according to at least one of the preceding claims, **characterised in that** reinforcement layers (5) comprise or consist of a metal fabric or textile fabric.

9. Heatable line (1) according to at least one of the preceding claims, **characterised in that** a barrier layer (6) adjoins the inner layer (2) on the inside.

10. Heatable line (1) according to Claim 9, **characterised in that** the barrier layer (6) comprises a polymeric material or a thermoplastic elastomer.

11. Heatable line (1) according to Claim 9, **characterised in that** the barrier layer (6) comprises an elastomer.

12. Heatable line (1) according to Claim 9, **characterised in that** the barrier layer (6) comprises or consists of a PP-EPDM copolymer.

13. Heatable line (1) according to at least one of the preceding claims, **characterised in that** the heating element (4) is at least one heating wire.

14. Heatable line (1) according to at least one of the preceding claims, **characterised in that** the heating element (4) extends at least along the axial direction of the line (1).

15. Heatable line (1) according to at least one of the preceding claims, **characterised in that** the heating element (4) extends both along the axial direction and the radial direction of the line (1).

## Revendications

1. Conduite apte à être chauffée (1), en particulier pour le transport de liquides dans des véhicules, comprenant au moins une couche intérieure (2), une couche extérieure (3) et un élément chauffant (4), étant précisé
qu'au moins à l'intérieur de la plage de température d'emploi de la conduite apte à être chauffée (1), la couche intérieure (2) présente une conductivité thermique plus élevée que la couche extérieure (3),
**caractérisée en ce qu'**il s'agit d'une conduite (1) à au moins quatre couches, avec deux couches de renforcement (5) disposées entre la couche intérieure (2) et la couche extérieure (3), étant précisé que l'élément chauffant (4) est disposé entre les deux couches de renforcement (5) et a essentiellement un contact avec les couches de renforcement (5).

2. Conduite apte à être chauffée (1) selon la revendication 1, **caractérisée en ce que** la conductivité thermique de la couche intérieure (2) est supérieure à 0,75 W/mK et la conductivité thermique de la couche extérieure (3) est inférieure à 0,05 W/mK.

3. Conduite apte à être chauffée (1) selon la revendication 1, **caractérisée en ce que** la conductivité thermique de la couche intérieure (2) est située entre 0,8 et 1,0 W/mK et la conductivité thermique de la couche extérieure (3) est située entre 0,01 et 0,04 W/mK.

4. Conduite apte à être chauffée (1) selon l'une des revendications précédentes, **caractérisée en ce que** la couche intérieure (2) et/ou la couche extérieure (3) comportent un matériau polymère ou une matière élastomère.

5. Conduite apte à être chauffée (1) selon l'une au moins des revendications précédentes, **caractérisée en ce que** la couche intérieure (2) et la couche extérieure (3) comportent la matière EPDM.

6. Conduite apte à être chauffée (1) selon l'une au moins des revendications précédentes, **caractérisée en ce que** la couche extérieure (3) comporte ou se compose d'un EPDM présentant une structure alvéolaire ouverte.

7. Conduite apte à être chauffée (1) selon l'une au moins des revendications précédentes, **caractérisée en ce que** la couche intérieure (2) comporte ou se compose d'un EPDM avec une charge de particules à conductivité thermique élevée.

8. Conduite apte à être chauffée (1) selon l'une au moins des revendications précédentes, **caractérisée en ce que** les couches de renforcement (5) comportent ou se composent d'un tissu métallique ou textile.

9. Conduite apte à être chauffée (1) selon l'une au moins des revendications précédentes, **caractérisée en ce qu'**une couche barrière (6) fait suite, à l'intérieur, à la couche intérieure (2).

10. Conduite apte à être chauffée (1) selon la revendication 9, **caractérisée en ce que** la couche barrière (6) comporte un matériau polymère ou un élastomère thermoplastique.

11. Conduite apte à être chauffée (1) selon la revendication 9, **caractérisée en ce que** la couche barrière (6) comporte un élastomère.

12. Conduite apte à être chauffée (1) selon la revendication 9, **caractérisée en ce que** la couche barrière (6) comporte ou se compose d'un copolymère PP-EPDM.

13. Conduite apte à être chauffée (1) selon l'une au moins des revendications précédentes, **caractérisée en ce que** l'élément chauffant (4) est constitué par au moins un filament chauffant.

14. Conduite apte à être chauffée (1) selon l'une au moins des revendications précédentes, **caractérisée en ce que** l'élément chauffant (4) s'étend au moins le long du sens axial de la conduite (1).

15. Conduite apte à être chauffée (1) selon l'une au moins des revendications précédentes, **caractérisée en ce**
**que** l'élément chauffant (4) s'étend aussi bien le long du sens axial que le long du sens radial de la conduite (1).
